# EUROPEAN PATENT APPLICATION

(11) **EP 4 848 618 A1**
(43) Date of publication of application: **02.12.2026**
(21) Application number: 26181042.8
(22) Date of filing: 26.05.2026
(51) Int. Cl.: H04B 7/185, B64U 80/86, G08G 5/57, H04W 4/44, B64U 101/20

(54) **INFORMATION TRANSMISSION SYSTEM INCLUDING UNMANNED AERIAL MACHINES FOR PERFORMING TASK FOR VEHICLE**

(30) Priority: 28.05.2025 JP 2025089298
(71) Applicant: Toyota Jidosha Kabushiki Kaisha, Toyota-shi, Aichi-ken 471-8571 (JP)
(72) Inventor: KOBAYASHI, Junya, Toyota-shi, 471-8571 (JP); USUI, Kunihiko, Toyota-shi, 471-8571 (JP); IBUKI, Taku, Toyota-shi, 471-8571 (JP)
(74) Representative: D Young & Co LLP

(57) **Abstract**

An information transmission system (10) including a first unmanned aerial machine (50a) and a second unmanned aerial machine (50b), which are configured to perform a predetermined task for a vehicle (20), by mutually transmitting information. When transmission of the information is to be made from one (50w) of the first and second unmanned aerial machines (50a,50b) to the other (50t) of the first and second unmanned aerial machines (50a,50b), the transmission of the information is made through a radio communication (R) in a case in which a predetermined condition (CNf) is not met, and the transmission of the information is made through a predetermined expression (REf) without through the radio communication (R) in a case in which the predetermined condition (CNf) is met. The predetermined expression (REf), which represents contents of the information, is to be made by the one (50w) of the first and second unmanned aerial machines (50a,50b) and is to be recognized by the other (50t) of the first and second unmanned aerial machines (50a,50b).

## Description

### FIELD OF THE INVENTION

The present invention relates to an information transmission system including: a first unmanned aerial machine and a second unmanned aerial machine, which are configured to perform predetermined task for a vehicle, by mutually transmitting information.

### BACKGROUND OF THE INVENTION

There is well known an information transmission system including: a first unmanned aerial machine and a second unmanned aerial machine, which are configured to mutually transmit information. An aerial spreading system disclosed in JP 2018-127076 A is an example of such an information transmission system. This Japanese Patent Application Publication discloses that, when a working aerial spreader suspends working, the working aerial spreader transmits information such as a work suspending position and a work record, to a taking-over aerial spreader, before returning, so that the taking-over aerial spreader can take over and continue the work.

### SUMMARY OF THE INVENTION

It is conceivable that a plurality of unmanned aerial machines would cooperate with each other to perform predetermined task for a vehicle. On the other hand, there would be a case in which the vehicle runs without a radio communication being satisfactorily performed between the unmanned aerial machines. In such a case, information could not be satisfactorily transmitted between the plurality of unmanned aerial machines.

The present invention was made in view of the background art described above. It is therefore an object of the present invention to provide an information transmission system including a plurality of unmanned aerial machines that are capable of satisfactorily transmitting information between the unmanned aerial machines according to a situation.

The object indicated above is achieved according to the following features of the present invention.

According to the invention, there is provided an information transmission system comprising a plurality of unmanned aerial machines including a first unmanned aerial machine and a second unmanned aerial machine, which are configured to perform a predetermined task for a vehicle, by mutually transmitting information. When transmission of the information is to be made from one of the first and second unmanned aerial machines to the other of the first and second unmanned aerial machines, the transmission of the information is made through a radio communication in a case in which a predetermined condition is not met, and the transmission of the information is made through a predetermined expression without through the radio communication in a case in which the predetermined condition is met. The predetermined expression, which represents contents of the information, is to be made by the one of the first and second unmanned aerial machines and is to be recognized by the other of the first and second unmanned aerial machines. When the predetermined condition is met, for example, it is determined that the transmission of the information through the radio communication is unlikely to be made satisfactorily.

In the information transmission system according to the invention, when transmission of the information is to be made from one of the first and second unmanned aerial machines to the other of the first and second unmanned aerial machines, the transmission of the information is made through the radio communication in the case in which the predetermined condition is not met, namely, in which it is not considered that the transmission of the information through the radio communication is unlikely to be made satisfactorily. Therefore, in a situation in which a communication interruption is unlikely, the transmission of the information is made through the radio communication. On the other hand, in the case in which the predetermined condition is met, namely, in which it is considered that the transmission of the information through the radio communication is unlikely to be made satisfactorily, the transmission of the information is made through the predetermined expression without through the radio communication, wherein the predetermined expression, which represents contents of the information, is to be made by the one of the first and second unmanned aerial machines and is to be recognized by the other of the first and second unmanned aerial machines. Therefore, even in a situation in which the communication interruption occurs, the transmission of the information is made satisfactorily. Thus, the transmission of the information between the plurality of unmanned aerial machines can be made satisfactorily, depending on situation of transmission of the information.

### BRIEF DESCRIPTION OF THE DRAWINGS

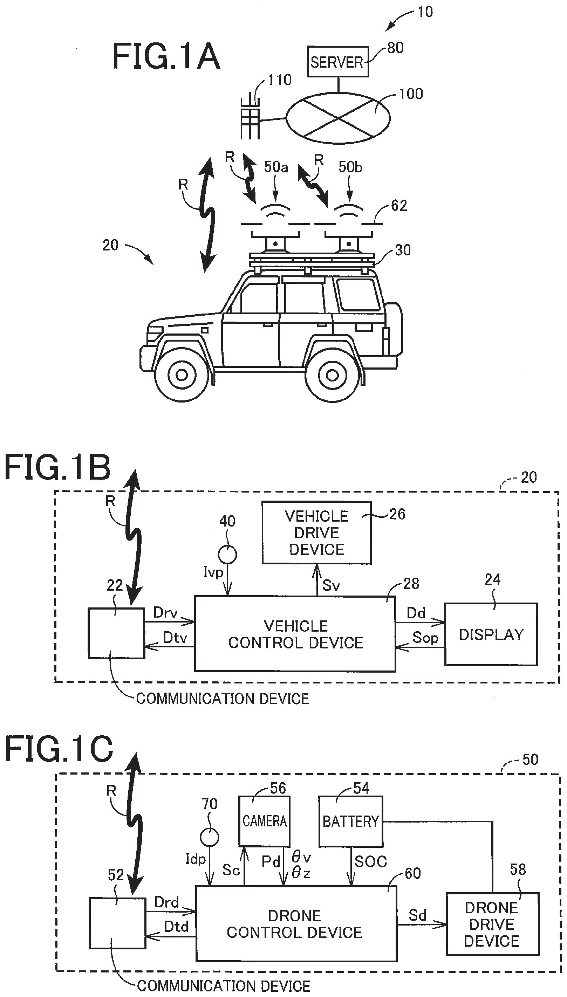

FIGS. 1A-1C are views for showing, by way of example, an information transmission system to which the present invention is applied, wherein FIG. 1A is a view schematically showing a construction of the information transmission system, FIG. 1B is a view schematically showing a construction of a vehicle, and FIG. 1C is a view schematically showing a construction of a drone;

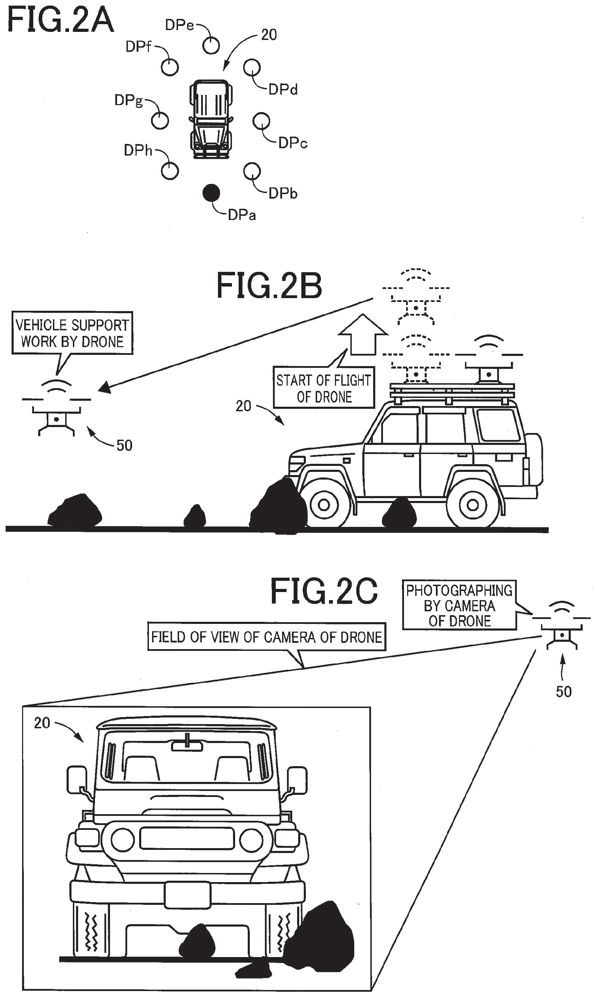

FIGS. 2A-2C are views for showing, by way of example, a vehicle support work performed by the information transmission system, wherein FIG. 2A is a view showing an initial position when the vehicle support work is performed, FIG. 2B is a view showing an initial stage of the vehicle support work, and FIG. 2C is a view showing provision of a photographed image in the vehicle support work;

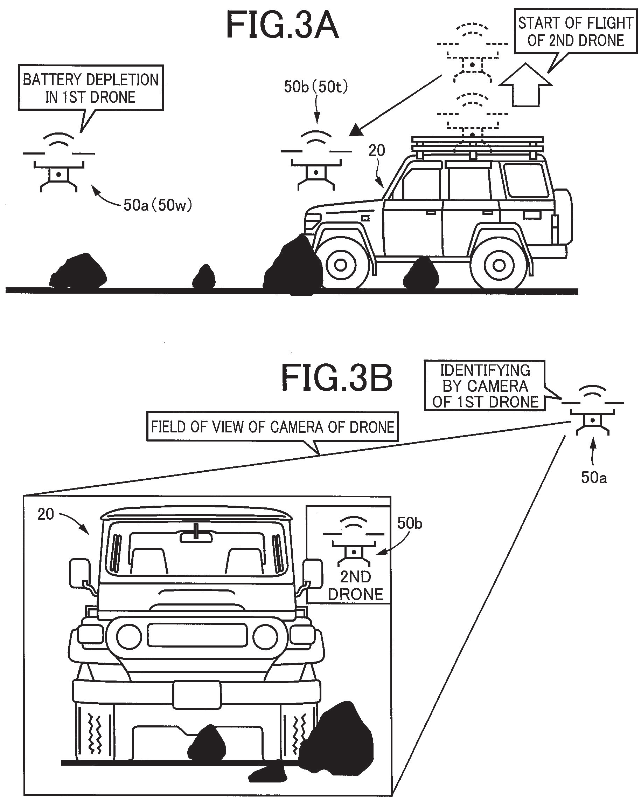

FIGS. 3A and 3B are views for showing, by way of example, a procedure for taking over the vehicle support work when a predetermined condition is met, wherein FIG. 3A is a view showing a situation in which the procedure for taking over the vehicle support work is started, and FIG. 3B is a view showing a situation in which transmission of information about the vehicle support work is started without use of a radio communication;

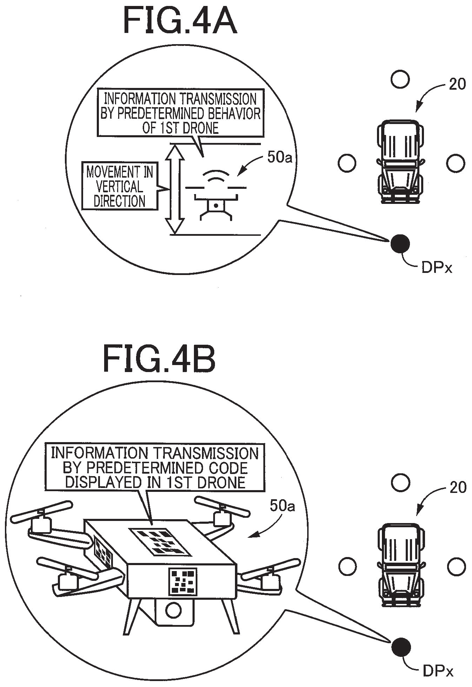

FIGS. 4A and 4B are views for showing, by way of example, the procedure for taking over the vehicle support work when the predetermined condition is met, wherein FIG. 4A is a view showing an example of the procedure for taking over the vehicle support work without use of the radio communication, and FIG. 4B is a view showing another example of the procedure for taking over the vehicle support work without use of the radio communication;

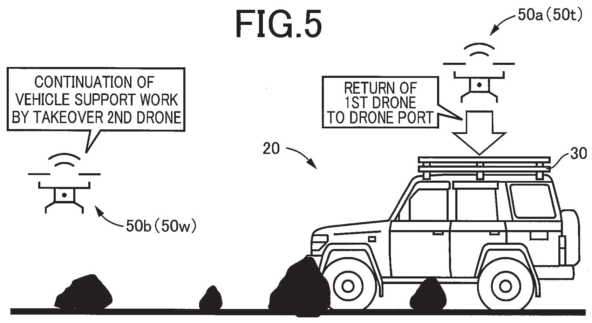

FIG. 5 is a view for showing, by way of example, the procedure for taking over the vehicle support work when the predetermined condition is met, and showing a situation in which taking over of the vehicle support work is completed; and

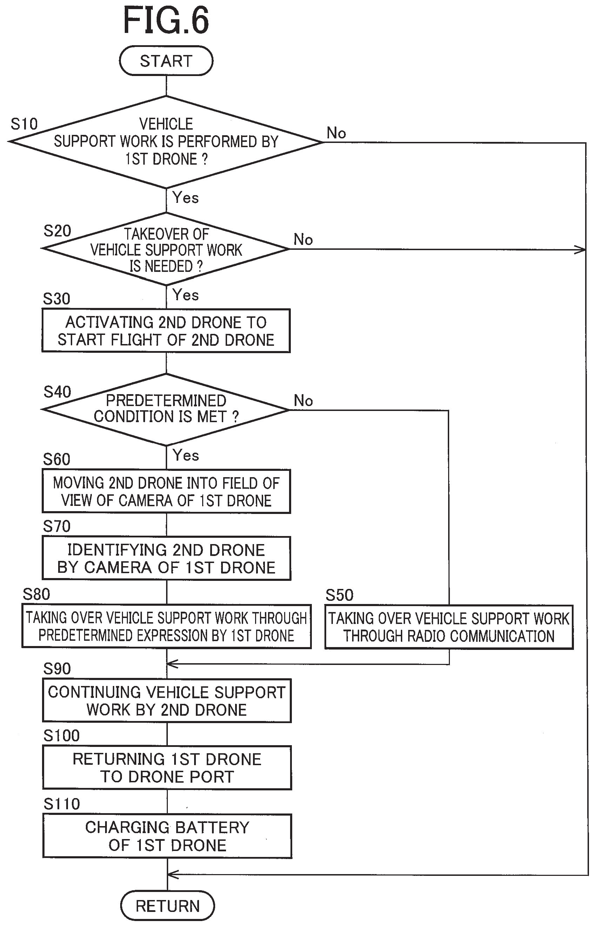

FIG. 6 is a flow chart showing a main part of control operations of the information transmission system, particularly, a control routine executed for enabling transmission of the information between the plurality of drones to be satisfactorily performed according to a situation.

### DETAILED DESCRIPTION OF PREFERRED EMBODIMENT

In the present embodiment, the above-described predetermined task may be, for example, a support work to be performed in cooperation with the vehicle. The above-described information may be, for example, information about the predetermined task, and may be, for example, information about the support work required to allow the support work to be taken over from one of the first and second unmanned aerial machines to the other of the first and second unmanned aerial machines.

The above-described radio communication may be, for example, radio communication connecting an external control device provided in the information transmission system, with the vehicle, the first unmanned aerial machine and the second unmanned aerial machine. Alternatively, the radio communication may be, for example, short-range radio communication or radio communication such as a wireless LAN (local area network such as regional network and campus network), which connects among the vehicle, the first unmanned aerial machine and the second unmanned aerial machine, without through the external control device.

Hereinafter, an embodiment of the invention will be described in detail with reference to the accompanying drawings.

### EMBODIMENT

FIGS. 1A-1C are views for showing, by way of example, an information transmission system 10 to which the present invention is applied, wherein FIG. 1A is a view schematically showing a construction of the information transmission system 10,

FIG. 1B is a view schematically showing a construction of a vehicle 20, and FIG. 1C is a view schematically showing a construction of a drone 50 that is provided in the information transmission system 10. The information transmission system 10 corresponds to an information transmission system of the present invention.

As shown in FIG. 1A, the information transmission system 10 includes a server 80 and the plurality of drones 50 that cooperate with each other to perform a predetermined task for the vehicle 20. The plurality of drones 50 include a first drone 50a and a second drone 50b.

As shown in FIG. 1B, the vehicle 20 includes a communication device 22, a display 24, a vehicle drive device 26 and a vehicle control device 28. The vehicle 20 is a known automobile that is to be driven by the vehicle drive device 26 including a power source (not shown), for example.

The communication device 22 exchanges various information with the vehicle control device 28, for example, via a cable. The communication device 22 exchanges various information with the server 80 via a publicly known network 100 external to the vehicle 20. The communication device 22 is connected to the network 100, for example, via a radio communication R with a radio device 110 that is provided outside the vehicle 20 (see FIG. 1A). The radio device 110 is a transmitting/receiving device which is connected to the network 100 and which is configured to transmit and receive various signals via the radio communication R.

The display 24 is a display device configured to display various information to a driver of the vehicle 20. The display 24 is located, for example, in front of a driver's seat of vehicle 20. The display 24 displays, for example, an operation menus and photographed images Pd transmitted from the drone 50. The display 24 also has an input device such as a touch panel, which is to be operated by the driver.

The vehicle control device 28 is a controller configured to execute various controls in the vehicle 20. The electronic control device 28 includes a so-called microcomputer incorporating a CPU, a ROM, a RAM and an input-output interface. The vehicle control device 28 executes the various controls in the vehicle 20, by causing the CPU to process various input signals, according to control programs stored in the ROM, while utilizing a temporary data storage function of the RAM.

The various signals are inputted to the vehicle control device 28 from various devices and sensors provided in the vehicle 20. The various devices and sensors include the communication device 22, the display 24 and a vehicle position sensor 40. The various signals include received data Drv, an operation signal Sop and position information Ivp.

The received data (Drv) includes data received from the drone 50. The data received from the drone 50 includes the photographed image Pd, position information Id and a charge remaining amount SOC of the battery 54. The operation signal Sop includes a signal corresponding to the driver's operation in the input device of the display 24.

The vehicle position sensor 40 includes a well-known GPS (Global Positioning System) antenna. The position information Ivp is information indicating a vehicle position VP on an earth surface or on a map based on GPS signals (orbital signals) transmitted from GPS satellites. The vehicle position VP is a position of the vehicle 20. Unless otherwise specified, the vehicle position VP indicates the current vehicle position VP.

The vehicle control device 28 outputs various command signals to various devices provided in the vehicle 20. The various devices include the communication device 22, the display 24 and the vehicle drive device 26. The various command signals include transmission data Dtv, display data Dd and the vehicle drive signal Sv.

The transmission data Dtv includes data to be transmitted to the drone 50. The data transmitted to the drone 50 includes signals to adjust attitude of the drone 50, signals to adjust a drone position DP, signals to adjust state of a camera 56 and the position information Ivp. The drone position DP is a position of the drone 50.

Unless otherwise specified, the drone position DP indicates the current drone position DP. The signals to adjust an attitude of the drone 50 attitude, signals to adjust the drone position DP, and signals to adjust a state of the camera 56 are based on the operation signal Sop. The display data Dd includes data of the image to be displayed on the display 24. The image data to be displayed on the display 24 is, for example, the photographed image Pd. The vehicle drive signal Sv is, for example, a command signal to control running of the vehicle 20.

As show in FIG. 1C, the drone 50 includes a communication device 52, a battery 54, the camera 56, a drone drive device 58, a drone control device 60 and a plurality of propellers 62 (see FIG. 1A). The drone 50 is a known unmanned aerial machine that is flown by the propellers 62 (see FIG. 1A) driven by the drone drive device 58. The drone 50 corresponds to each of "first and second unmanned aerial machines" recited in the appended claim, and cooperates with the vehicle 20 to perform the predetermined task. The predetermined task is, for example, a predetermined vehicle support work for assisting the vehicle 20. The vehicle support work is a support work for the vehicle 20. The first drone 50a corresponds to "first unmanned aerial machine" recited in the appended claims. The second drone 50b corresponds to "second unmanned aerial machine" recited in the appended claims. The first drone 50a and the second drone 50b have substantially the same construction. When the drone 50 is not in operation, it is mounted on a drone port 30, for example, located on a roof of the vehicle 20 (see FIG. 1A). The drone port 30 is a base from which the drone 50 departs and in which the drone 50. The drone 50 can use the drone port 30 so as to be charged by the battery 54, for example.

The communication device 52 exchanges various information with the drone control device 60, for example, via a cable. The communication device 52 communicates with the server 80 via the network 100 to exchange various information. The communication device 52 is connected to the network 100, for example, via the radio communication R with the radio device 110 (see FIG. 1A).

The battery 54 supplies an electric power to the drone drive device 58 to drive the propellers 62 and to operate various devices provided in the drone 50.

The camera 56 is attached to a housing of the drone 50, for example. The camera 56 is positioned such that its shooting direction is directed to a front of the drone 50, for example. The camera 56 also has a mechanism for controlling a vertical shooting angle θv that is a up/down tilt of the shooting direction, and a shooting range θz that is dependent on a zoom ratio. Each of the vertical shooting angle θv and the shooting range θz can be controlled within a predetermined range.

The drone control device 60 is a controller configured to execute various controls in the drone 50. The drone control device 60 includes a so-called microcomputer incorporating a CPU, a ROM, a RAM and an input-output interface. The drone control device 60 executes the various controls in the drone 50, by causing the CPU to process various input signals, according to control programs stored in the ROM, while utilizing a temporary data storage function of the RAM.

The drone control device 60 receives the various signals from various devices and sensors provided in the drone 50. The various devices and sensors include the communication device 52, battery 54, camera 56 and drone position sensor 70. The various signals include the received data Drd, charge remaining amount SOC, photographed image Pd, vertical shooting angle θv, shooting range θz and position information Idp.

The received data Drd includes data received from another drone 50 and data received from the vehicle 20. The other drone 50 may be, for example, the second drone 50b relative to the first drone 50a, or the first drone 50a relative to the second drone 50b. The data received from the other drone 50 include signals indicative of the attitude of the drone 50, position information Idp of the drone 50 and state of the camera 56 of the drone 50. The state of the camera 56 includes the vertical shooting angle θv and the shooting range θz. The data received from the vehicle 20 includes the signals to adjust the attitude of the drone 50, the drone position DP, the state of the camera 56 and the position information Ivp.

The charge remaining amount SOC is a value [%] indicative of a state of charge of the battery 54. The photographed image Pd is, for example, an image of an area around the vehicle 20 photographed by the camera 56 of the drone 50. The drone position sensor 70 includes a well-known GPS antenna. The position information Idp is information indicating a drone position DP on an earth surface or on a map based on the GPS signals. The drone position DP is a position of the drone 50.

The drone control device 60 outputs various command signals to various devices provided in the drone 50. The various devices include the communication device 52, the camera 56 and the drone drive device 58. The various command signals include the transmission data Dtd, the camera control signal Sc and the drone drive signal Sd.

The transmission data Dtd includes data to be transmitted to the other drone 50 and data to be transmitted to the vehicle 20. The data to be transmitted to the other drone 50 includes signals indicative of the attitude of the drone 50, the position information Idp, the state of the camera 56 and the remaining charge amount SOC. The data to be transmitted to the vehicle 20 includes the photographed image Pd, the position information Idp and the remaining charge amount SOC. The camera control signal Sc is a command signal for controlling the state of the camera 56. The drone drive signal Sd includes command signals for controlling the attitude of the drone 50 and the drone position DP.

As shown in FIG. 1A, the server 80 is an external control device that exists separately from the vehicle 20 and the drone 50. The server 80 is, for example, a computer equipped with a CPU and connected to the network 100. The server 80 is an external control device connected to the vehicle 20, the first drone 50a and the second drone 50b via the radio communication R. The server 80 is a device configured to accept, process, analyze, store and provides various information. The server 80 obtains various information from the vehicle 20 and drone 50 via communication.

The server 80 receives, from the drone 50, the various information such as the photographed image PD and the signals indicative of the attitude of the drone 50, the position information Idp, the state of the camera 56 and the charge remaining amount SOC. The server 80 receives, from the vehicle 20, the various information such as the signal for adjusting the attitude of the drone 50, the drone position DP and the state of the camera 56.

The first drone 50a and the second drone 50b mutually transmit the various information, for example, via the server 80. The vehicle 20 and the drone 50 mutually transmit the various information, for example, via the server 80. In the information transmission system 10, the first drone 50a and the second drone 50b mutually transmit information, for example, via the radio communication R. The mutually transmitted information is, for example, information about the predetermined task. The mutually transmitted information is, for example, information about the vehicle support work, for example, to allowing the vehicle support work to be taken over between the first drone 50a and the second drone 50b.

The drone control device 60 performs flight control of the drone 50 based on, for example, the signals for adjusting the attitude of the drone 50 and the drone position DP.

The drone control device 60 performs the vehicle support work in cooperation with the vehicle 20 based on, for example, the signals for adjusting the attitude of the drone 50, the drone position DP and the state of the camera 56 and the position information Ivp. During the vehicle support work, the drone control device 60 provides the vehicle 20 with the photographed image Pd, while controlling the vertical shooting angle θv, shooting range θz and drone position DP. The vehicle support work is performed through a collaborative control between the vehicle control device 28 and the drone control device 60.

FIGS. 2A-2C are views for showing, by way of example, the vehicle support work performed by the information transmission system 10, wherein FIG. 2A is a view showing an initial position DPx when the vehicle support work is performed,

FIG. 2B is a view showing an initial stage of the vehicle support work, and FIG. 2C is a view showing provision of the photographed image Pd in the vehicle support work.

The initial position DPx, which is shown in FIG. 2A, is the drone position DP in vicinity of the vehicle 20 to which the drone 50 is to be first moved when the vehicle support work is to be performed. The initial position DPx is, for example, a predetermined drone position DP for photographing images around the vehicle 20. In an example shown in FIG. 2A, there are eight initial positions DPx consisting of an initial position DPa, an initial position DPb, an initial position DPc, an initial position DPd, an initial position DPe, an initial position DPf, an initial position DPg and an initial position DPh. In the information transmission system 10, when the vehicle support work is to be performed, for example, one of the plurality of initial positions DPx is selected by the driver.

When the vehicle support work is started, the drone 50 is automatically moved to a selected one of the initial positions DPx, as shown in FIG. 2B. FIG. 2B shows a case in which the initial position Dpa is selected among the plurality of initial positions DPx.

As shown in FIG. 2C, during the vehicle support work, the camera 56 of the drone 50 photographs images around the vehicle 20, which are desired by the driver. FIG. 2C shows an example of the photographed image Pd photographed from a front side of the vehicle 20. The vehicle support work is performed in order to avoid the vehicle 20 from colliding with an obstacle and being damaged, or from becoming immobilized by running over an obstacle, by checking a clearance between the vehicle 20 and an obstacle in the photographed image Pd. During the vehicle support work, for example, the attitude of the drone 50, the drone position DP and the state of the camera 56 (such as the vertical shooting angle θv and the shooting range θz) is adjusted by operation of the driver. At an initial stage of the vehicle support work, each of the attitude of the drone 50 and the state of the camera 56 is set to a predetermined initial state. In the vehicle support work, the drone 50 is caused to follow the vehicle 20 as the vehicle 20 is moved.

The information transmission system 10 provides the photographed image Pd to the vehicle 20, allowing the driver to, for example, stably monitor the clearance between the vehicle 20 and the obstacle in real time. As a result, if there is a risk of the vehicle 20 coming into contact with the obstacle on or near the ground (such as uneven road surfaces, rocks, rubble or other objects that could come into contact with the vehicle 20 during running of the vehicle 20 so as to cause an obstruction), the driver can check the situation before contact and avoid such a contact. Alternatively, the driver can aim for contact at the intended location and drive while checking the extent of the contact, thereby limiting damage to an expected level. Alternatively, by knowing location of possible contact with the obstacle, the driver can correctly determine a direction in which the vehicle 20 is to be move, thereby minimizing damage of the vehicle 20 or, at least, avoiding a situation in which the vehicle 20 becomes unable to run. If the driver gets out of the vehicle 20 in an area with an obstacle or a rough road surface so as to check whether the situation will make it impossible to drive, there is a risk of injury of the driver. However, the driver can check the situation safely from within vehicle 20 by checking the photographed image Pd.

There will be described a procedure for taking over the vehicle support work from one of the first and second drones 50a, 50b to the other of the first and second drones 50a, 50b. In the following description, the one of the first and second drones 50a, 50b, from which the vehicle support work is to be taken over to the other of the first and second drones 50a, 50b, will be referred to as "work drone 50w", and the other of the first and second drones 50a, 50b, which is to take over the vehicle support work from the one of the first and second drones 50a, 50b, will be referred to as "takeover drone 50t". For example, where the first drone 50a is designated as the work drone 50w, the second drone 50b will be designated as the takeover drone 50t. When the vehicle support work has been taken over from the first drone 50a to the second drone 50b, the second drone 50b will be designated as the work drone 50w while the first drone 50a will be designated as the takeover drone 50t.

Situations in which the vehicle support work needs to be taken over from the work drone 50w to the takeover drone 50t include a situation in which the charge remaining amount SOC of the battery 54 of the work drone 50w has been reduced and a situation in which an abnormality occurs in the work drone 50w thereby making it difficult to perform the vehicle support work, for example. The situation of reduction of the charge remaining amount SOC includes a case in which the charge remaining amount SOC has become not larger than a predetermined value SOCf and a case in which the vehicle support work has been performed for at least a predetermined length of time TMf, for example. The predetermined value SOCf of the charge remaining amount SOC is, for example, a predetermined minimum value of the charge remaining amount SOC, which allows the work drone 50w to reliably return to the drone port 30 after the vehicle support work has been taken over to the takeover drone 50t. The predetermined time TMf is, for example, a predetermined duration of the vehicle support work after which it can be determined that the charge remaining amount SOC of the battery 54 of the work drone 50w has become not larger than the predetermined value SOCf.

The information transmission system 10 determines whether the vehicle support work needs to be taken over from the work drone 50w to the takeover drone 50t. When determining that the takeover of the vehicle support work is needed, the information transmission system 10 activates the takeover drone 50t and moves the takeover drone 50t by automatic flight to the vicinity of the selected initial position DPx.

The work drone 50w transmits the information about the vehicle support work, to the takeover drone 50t via the server 80. The information about the vehicle support work includes information indicative of an adjustment amount from the initial state of the attitude of the drone 50, an adjustment amount from the initial position DPx of the drone position DP and an adjustment amount from the initial state of the camera 56.

Radio waves of the radio communication R could not be able to reach satisfactorily on unpaved roads in mountain forest areas, which could result in communication being cut off. On the unpaved roads, for example, trees are likely to obstruct the roads, thereby making the radio communication environment poor. This could make it difficult for the radio communication systems to function satisfactorily. When the vehicle support work is performed on such unpaved roads, there is a risk that information about the vehicle support work could not be satisfactorily transmitted via the server 80.

The information transmission system 10 determines whether the predetermined condition CNf is met, wherein the predetermined condition CNf is a predetermined condition under which the radio communication R is unlikely to be performed satisfactorily. The predetermined condition CNf is that the vehicle 20 is running in a predetermined off-road location or on an unpaved road. That is, the predetermined condition CNf is that the vehicle 20 is running on a poor-conditioned road or an unpaved road. Alternatively, the predetermined condition CNf is that a radio wave strength Ir of the radio communication R is smaller than a predetermined strength value If. The predetermined strength value If is, for example, a predetermined threshold for determining whether the radio communication R is unlikely to be performed satisfactorily. Alternatively, the predetermined condition CNf is that the signal strength of the GPS signal is smaller than a predetermined strength value. The predetermined strength value is, for example, a predetermined threshold for determining whether the drone position DP is unlikely to be satisfactorily measured. In other words, the predetermined condition CNf is met when the vehicle 20 is running in an environment in which the radio communication R is difficult to be performed.

When determining that the predetermined condition CNf is not met, the information transmission system 10 makes the takeover of the vehicle support work by using the radio communication R. That is, when the predetermined condition CNf is not met upon transmission of the information about the vehicle support work from the work drone 50w to the takeover drone 50t, the information transmission system 10 transmits the information about the vehicle support work from the work drone 50w to the takeover drone 50t by using the radio communication R.

FIGS. 3-5 are views for showing, by way of examples, a procedure for taking over the vehicle support work when the predetermined condition CNf is met. FIG. 3A is a view showing a situation in which the procedure for taking over the vehicle support work is started. FIG. 3B is a view showing a situation in which transmission of information about the vehicle support work is started without use of the radio communication R. FIG. 4A is a view showing an example of the procedure for taking over the vehicle support work without use of the radio communication R. FIG. 4B is a view showing another example of the procedure for taking over the vehicle support work without use of the radio communication. FIG. 5 is a view for showing a situation in which the takeover of the vehicle support work is completed.

In FIG. 3A, it is determined that the takeover of the vehicle support work is needed, because of reduction of the charge remaining amount SOC of the battery 54 of the first drone 50a that has served as the work drone 50w, so that the second drone 50b is designated as the takeover drone 50t and is activated to start flying. The second drone 50b is automatically moved to the vicinity of the selected initial position DPx. It is noted that the situation up to this point when the takeover of the vehicle support work is started is the same regardless of whether the predetermined condition CNf is met or not.

In FIG. 3B, when the information about the vehicle support work is transmitted without use of the radio communication R, the second drone 50b is moved to a position within a field of view of the camera 56 of the first drone 50a. The first drone 50a identifies the second drone 50b through the camera 56 of the first drone 50a. That is, the drone 50a recognizes the second drone 50b through the information obtained from the camera 56 without using the radio communication R.

In FIG. 4, after having recognized the second drone 50b, the first drone 50a transmits the information about the vehicle support work to the second drone 50b through a predetermined expression REf. The second drone 50b grasps the information about the vehicle support work by recognizing the predetermined expression REf made by the first drone 50a. The predetermined expression REf is a predetermined expression that presents contents of the information about the vehicle support work, for example. In this way, the vehicle support work is taken over from the first drone 50a to the second drone 50b.

When the predetermined condition CNf is met upon transmission of the information about the vehicle support work from the work drone 50w to the takeover drone 50t, the information transmission system 10 causes the information about the vehicle support work to be transmitted from the work drone 50w to the takeover drone 50t through the predetermined expression REf which is made by the work drone 50w and which is recognized by the takeover drone 50t, without using the radio communication R.

In FIG. 4A, the predetermined expression REf made by the first drone 50a is a predetermined behavior ACf. The predetermined behavior ACf is a predetermined behavior corresponding to the information about the vehicle support work, for example. The predetermined behavior ACf is a predetermined behavior that changes an appearance state of the first drone 50a, such as vertical movement, horizontal movement and rotation of the first drone 50a. The first drone 50a represents the adjustment amount from the initial state of the attitude of the drone 50, for example, by number of movement or amount of movement of the first drone 50a in a vertical direction. The first drone 50a represents the adjustment amount from the initial position DPx of the drone position DP, for example, by number of movement or amount of movement of the first drone 50a in a horizontal direction. The first drone 50a represents the adjustment amount from the initial state of the state of the camera 56, for example, by number of rotations of the first drone 50a. The first drone 50a selects the predetermined behavior ACf that represents the adjustment amount closest to the actual adjustment amount. The second drone 50b obtains the information about the vehicle support work by recognizing the predetermined behavior ACf made by the first drone 50a through the camera 56 of the second drone 50b.

In FIG.4B, the predetermined expression REf made by the first drone 50a is display of a predetermined code CDf. The predetermined code CDf is, for example, a predetermined code corresponding to the information about the vehicle support work. For example, the predetermined code CDf may be a plurality of types of codes attached to surfaces of the housing of the first drone 50a. The predetermined expression REf is a motion of the first drone 50a by which one of the types of codes is directed toward the second drone 50b. For example, the first drone 50a selects the predetermined code CDf that represents the adjustment amount closest to the actual adjustment amount and changes its posture such that the selected predetermined code CDf is directed toward the second drone 50b. The second drone 50b obtains the information about the vehicle support work by recognizing the predetermined code CDf displayed by the first drone 50a through the camera 56 of the second drone 50b.

In FIG. 5, after the information about the vehicle support work has been taken over from the first drone 50a to the second drone 50b, the second drone 50b is moved to the initial position DPx, and continues the vehicle support work based on the information about the vehicle support work. The second drone 50b is designated as the work drone 50w. The first drone 50a is returned to the drone port 30. The first drone 50a is designated as the takeover drone 50t, for example, after the battery 54 of the first drone 50a has been completely charged.

FIG. 6 is a flow chart showing a main part of control operations of the information transmission system 10, particularly, a control routine executed for enabling transmission of the information between the plurality of drones 50 to be satisfactorily performed according to the situation of transmission of the information. This control routine is executed, for example, in a repeated manner.

Each step of the control routine shown in the flow chart of FIG. 6 corresponds to function of the information transmission system 10. The control routine is initiated with step S10 that is implemented to determine whether the first drone 50a is automatically flying, namely, whether the vehicle support work is being performed by the first drone 50a. When a negative determination is made at step S10, one execution of the control routine is terminated. When an affirmative determination is made at step S10, step S20 is implemented to determine whether the takeover of the vehicle support work is needed or not. This determination is made, for example, based on whether the charge remaining amount SOC is equal to or smaller than the predetermined value SOCf. When a negative determination is made at step S20, one execution of the control routine is terminated. When an affirmative determination is made at step S20, step S30 is implemented to activate the second drone 50b designated as the takeover drone 50t, whereby the second drone 50b starts automatic flight. Then, step S40 is implemented to determine whether the predetermined condition CNf is met or not. When a negative determination is made at step S40, the control flow goes to step S50 at which the vehicle support work is taken over by using the radio communication R. When an affirmative determination is made at step S40, step S60 is implemented to move the second drone 50b to a position within the field of view of the camera 56 of the first drone 50a. Then, step S70 is implemented whereby the second drone 50b is identified by the camera 56 of the first drone 50a. Then, at step S80, the predetermined expression REf is made by the first drone 50a whereby the takeover of the vehicle support work is made. After implementation of step S50 or step S80, step S90 is implemented whereby the vehicle support work is continued by the second drone 50b. The, at step S100, the first drone 50a is returned to the drone port 30. At step S110, the battery 54 of the first drone 50a is charged. The control routine shown in the flow chart of FIG. 6 is executed also when the second drone 50b and the first drone 50a are designated as the work drone 50w and the takeover drone 50t, respectively.

As described above, in the present embodiment, when transmission of the information about the vehicle support work is to be made from the work drone 50w to the takeover drone 50t, the transmission of the information about the vehicle support work is made through the radio communication R in a case in which the predetermined condition CNf is not met, namely, in which it is not considered that the transmission of the information through the radio communication R is unlikely to be made satisfactorily. Therefore, in a situation in which a communication interruption is unlikely, the transmission of the information about the vehicle support work is made through the radio communication R. Consequently, the takeover of the vehicle support work is made satisfactorily. On the other hand, in a case in which the predetermined condition CNf is met, namely, in which it is considered that the transmission of the information through the radio communication R is unlikely to be made satisfactorily, the transmission of the information about the vehicle support work is made through the predetermined expression REf without through the radio communication R, wherein the predetermined expression REf, which represents contents of the information, is to be made by the work drone 50w and is to be recognized by the takeover drone 50t. Therefore, even in a situation in which the communication interruption occurs in the transmission of the information about the vehicle support work, the transmission of the information is made satisfactorily. Consequently, the takeover of the vehicle support work is made satisfactorily. Thus, the transmission of the information between the plurality of drones 50 can be made satisfactorily, depending on situation of transmission of the information.

In the present embodiment, the predetermined condition CNf is that the vehicle 20 is in an off-road location or is running on an unpaved road. Thus, even in such a situation with poor communication environments, the transmission of the information about the vehicle support work and the takeover of the vehicle support work can be made satisfactorily.

In the present embodiment, the predetermined condition CNf is that the radio wave strength Ir of the radio communication R is smaller than the predetermined strength value If. Thus, even in such a situation in which the radio wave strength Ir of the radio communication R is smaller than the predetermined strength value If, the transmission of the information about the vehicle support work and the takeover of the vehicle support work can be made satisfactorily.

In the present embodiment, the predetermined expression REf is the predetermined behavior ACf corresponding to the information about the vehicle support work. Thus, even in such a situation in which the communication interruption occurs, the transmission of the information about the vehicle support work and the takeover of the vehicle support work can be made satisfactorily.

In the present embodiment, the predetermined expression REf is the display of a predetermined code CDf corresponding to the information about the vehicle support work. Thus, even in such a situation in which the communication interruption occurs, the transmission of the information about the vehicle support work and the takeover of the vehicle support work can be made satisfactorily.

While the preferred embodiment of the invention has been described in detail by reference to the drawings, it is to be understood that the invention may be otherwise embodied.

In the above-described embodiment, the predetermined behavior ACf or predetermined code CDf is displayed as an example of the predetermined expression REf on the display. However, the present invention is not limited to this detail. For example, the predetermined expression REF may be a light emission or an audio output from the drone 50, wherein each of the light emission and the audio output corresponds to the information about the vehicle support work. The light emission may be, for example, a change in flashing pattern of the light, and is to be recognized by the camera 56. The audio output may be, for example, a change in volume or intermittence of the audio output from a speaker, and is to be recognized by a microphone.

In the above-described embodiment, the display of the predetermined code CDf is made by showing one of the plurality of types of codes attached to surfaces of the housing of the drone 50. However, the present invention is not limited to this detail. For example, the display of the predetermined code CDf may be a display on the drone 50 showing a code corresponding to the information about the vehicle support work.

In the above-described embodiment, in the control routine shown by the flow chart in FIG. 6, step S20 is implemented to determine whether the takeover of the vehicle support work is needed or not, depending on whether the charge remaining amount SOC is equal to or smaller than the predetermined value SOCf. However, the present invention is not limited to this detail. For example, the determination at step S20 may be made depending on whether the vehicle support work has be performed for at least a predetermined length of time TMf, or depending on whether an abnormality making the vehicle support work difficult to be performed by the work drone 50w occurs or not.

Where the takeover of the vehicle support work is made through the predetermined expression REf, an amount of consume of electric power of the battery 54 could be larger than where the takeover is made through the radio communication R. Therefore, when the predetermined condition CNf is met, the predetermined value SOCf of the charge remaining amount SOC may be set larger, or the predetermined length of time TMf may be set shorter, than when the predetermined condition CNf is not met.

In the above-described embodiment, the plurality of drones 50 include two drones 50 consisting of the first and second drones 50a, 50b. However, the plurality of drones 50 may include three or more drones 50. Where the plurality of drones 50 include three or more drones 50, the work drone 50w and the takeover drone 50t can be constituted by two of the three drones 50. Where the plurality of drones 50 include four or more drones 50, the work drone 50w and the takeover drone 50t can be constituted by two of the four drones 50, and another set of the work drone 50w and the takeover drone 50t can be constituted by other two of the four drones 50. In this case, the takeover of the vehicle support work between the work drone 50w and the takeover drone 50t and that between another set of the work drone 50w and the takeover drone 50t may be made at substantially the same time.

In the above-described embodiment, the predetermined task is the vehicle support work. However, the predetermined task may be, for example, a recreational activity such as having the drone 50 film a video of the moving vehicle 20.

In the above-described embodiment, the communication between the vehicle 20 and the drone 50 and the communication between the first and second drones 50a, 50b are made through the server 80. However, these communications may be made directly, for example, through a short-range radio communication or a wireless LAN. In the information transmission system 10, the first and second drones 50a, 50b may mutually transmit the information about the predetermined task through a radio communication such as the short-range radio communication, in place of through the radio communication R. In this case, the information transmission system 10 may not include the server 80.

In the above-described embodiment, the predetermined condition CNf may include not only external factors resulting from a deterioration of the communication environment, such as the vehicle 20 traveling on an unpaved road, but also internal factors such as a malfunction of the communication device 52 provided in the drone 50. A communication interruption could occur due to deterioration of a radio communication environment (radio communication R, short-range radio communication, etc.), and also due to malfunctions of the communication device 52, etc.

In the above-described embodiment, the transmission of information between the plurality of drones 50 may be the transmission of information that occurs when the number of work drones 50w is increased. The information transmitted between the plurality of drones 50 does not necessarily have to information related to the predetermined task. For example, the present invention can be applied even where the plurality of drones 50 flying side by side near the vehicle 20 are not performing the predetermined task, but some information is transmitted between the plurality of drones 50.

In the above-described embodiment, it is not necessary to determine whether the takeover of the vehicle support work (vehicle support work) is needed or not. In this case, for example, steps S10-S30 and S90-S110 may be omitted in the control routine shown by the flow chart of FIG. 6. Further, the takeover of the vehicle support work at steps S50 and S80 may be replaced with information transmission between the plurality of drones 50.

It is to be understood that the embodiment described above is given for illustrative purpose only, and that the present invention may be embodied with various modifications and improvements which may occur to those skilled in the art.

### NOMENCLATURE OF ELEMENTS

10: information transmission system
20: vehicle
50: drone (unmanned aerial machine)
50a: first drone (first unmanned aerial machine)
50b: second drone (second unmanned aerial machine)
50w: work drone (one of first and second unmanned aerial machines)
50t: takeover drone (the other of the first and second unmanned aerial machines)
R: radio communication

## Claims

1. An information transmission system (10) comprising:
a plurality of unmanned aerial machines (50) including a first unmanned aerial machine (50a) and a second unmanned aerial machine (50b), which are configured to perform a predetermined task for a vehicle (20), by mutually transmitting information,
wherein, when transmission of the information is to be made from one (50w) of the first and second unmanned aerial machines (50a,50b) to the other (50t) of the first and second unmanned aerial machines (50a,50b), the transmission of the information is made through a radio communication (R) in a case in which a predetermined condition (CNf) is not met, and the transmission of the information is made through a predetermined expression (REf) without through the radio communication (R) in a case in which the predetermined condition (CNf) is met, and
wherein the predetermined expression (REf), which represents contents of the information, is to be made by the one (50w) of the first and second unmanned aerial machines (50a,50b) and is to be recognized by the other (50t) of the first and second unmanned aerial machines (50a,50b).

2. The information transmission system (10) according to claim 1,
wherein the predetermined condition (CNf) is that the vehicle (20) is in an off-road location or is running on an unpaved road.

3. The information transmission system (10) according to claim 1,
wherein the predetermined condition (CNf) is that a radio wave strength of the radio communication (R) is smaller than a predetermined strength value.

4. The information transmission system (10) according to any one of claims 1-3,
wherein the predetermined expression (REf) is a predetermined behavior corresponding to the information.

5. The information transmission system (10) according to any one of claims 1-3,
wherein the predetermined expression (REf) is a display of a predetermined code corresponding to the information.

6. The information transmission system (10) according to any one of claims 1-5,
wherein, when the predetermined condition (CNf) is met, it is determined that the transmission of the information through the radio communication (R) is unlikely to be made satisfactorily.
